# EUROPEAN PATENT SPECIFICATION

(11) **EP 1 796 255 B1**
(45) Date of publication and mention of the grant of the patent: **17.02.2016**
(21) Application number: 05743295.7
(22) Date of filing: 30.05.2005
(51) Int. Cl.: H02M 5/458, F25B 1/00, F25B 49/02

(54) **AIR CONDITIONER**
KLIMAANLAGE
CLIMATISATION

(30) Priority: 21.06.2004 JP 2004182626
(43) Date of publication of application: 13.06.2007
(73) Proprietor: Toshiba Carrier Corporation, Tokyo 105-8001 (JP)
(72) Inventor: KOBAYASHI, Takehiro, Shizuoka-ken (JP); KOIZUMI, Tetsuya, Shizuoka-ken (JP)
(74) Representative: Hoffmann Eitle
(86) International application number: PCT/JP2005/009867
(87) International publication number: WO 2005/124988

(56) References cited:
- WO-A-98/10508
- WO-A-02/103877
- WO-A1-98/10508
- GB-A- 2 215 866
- JP-A- 1 070 657
- JP-A- 9 140 151
- JP-A- 05 091 751
- JP-A- 07 194 118
- JP-A- 07 245 957
- JP-A- 09 037 554
- JP-B2- 2 557 903

## Description

### Technical Field

The present invention relates to an air conditioning apparatus having a plurality of compressors driven by respective inverter circuits.

### Background Art

There has heretofore been proposed an air conditioning apparatus having two capacity variable compressors driven and controlled by respective separate inverter circuits (for example, refer to Japanese Patent No. 2557903). The air conditioning apparatus is provided with a refrigerating cycle in which the exhaust side of the two compressors is connected to one refrigerant pipe in a shared manner and the intake side thereof is also connected to one refrigerant pipe in a shared manner.

The power source circuit driving the two compressors in such air conditioning apparatus includes one which rectifies alternating current from an AC power source by use of one rectifier circuit, converts an output of the rectifier circuit into alternating current of variable frequency by use of two inverter circuits and then supplies the respective alternating currents to the corresponding compressors, and one which rectifies alternating current from an AC power source by use of two rectifier circuits, converts respective outputs of the rectifier circuits into alternating current of variable frequency by use of inverter circuits and then supplies the respective alternating currents to the corresponding compressors.

GB2215866, WO98/10508 and WO02/103877 show further prior art examples relevant to the present invention.

### Disclosure of the Invention

### Problem to be solved by the present invention

The AC power source driving the above described air conditioning apparatus includes a commercial three-phase AC power source of 200 V and a commercial three-phase AC power source of 400 V. Here, in the case of an air conditioning apparatus having an air conditioning capacity of 10 horsepower, the capacity of the two compressors is equivalent to 5 horsepower; for example, when the three-phase AC power source of 400 V drives a compressor of 5 horsepower, the input current in the AC power source side is approximately 11 A. Consequently, when two compressors are driven, the current in the AC power source side is 22 A.

When alternating current from an AC power source is rectified by one rectifier circuit to obtain direct current for two compressors, the current flowing in the rectifier circuit is approximately 41 A, so the rectifier circuit used must have a rating of 50 A.

However, the rectifier circuit having a rating of AC input voltage of 400 V and a rating of output current of 50 A is not common, being a special kind from a viewpoint of capacity, thus resulting in a large configuration and high cost.

Meanwhile, as the inverter device controlling the capacity of a compressor, there is mostly used a compound module having a rectifier circuit and inverter circuit integrated as one package. In the compound module, the rectifier circuit acts as the DC power source of the inverter circuit incorporated integrally therewith, thus having a rating identical with that of the inverter circuit.

Accordingly, when there is used the compound module which rectifies alternating current from an AC power source by use of one rectifier circuit to obtain DC power for two compressors, there must be used as the inverter circuit an element having a large rating capable of outputting AC power for two compressors. The element having such a large rating is expensive and has a large configuration, increasing the size of the air conditioning apparatus holding the element.

Thus, without using any compound module, there can alternatively be used a configuration which separates a rectifier circuit and inverter circuit and makes semiconductor connection. In this case, however, it takes much labor to perform wiring and also, a wide installation space is required.

Meanwhile, when a configuration is used in which the DC power of two inverter circuits is obtained from respective separate rectifier circuits, the rating of current of the rectifier circuit is identical with that of the inverter circuit, so a compound module can be used.

In this configuration, however, between the rectifier circuit and inverter circuit, there must be arranged for each compound module, circuit elements such as a power factor improving reactor and a smoothing capacitor, and also a filter circuit, thus resulting in a large configuration and high cost.

To solve the above problem, the present invention has been achieved. An object of the present invention is to provide an air conditioning apparatus capable of achieving simplification of configuration, downsizing even when a plurality of compressors driven by respective inverter circuits are included, and balancing the current value of the inverter circuits when both compressors operate.

### Means for solving the problem

To achieve the above object, according to the present invention, an air conditioning apparatus having a plurality of compressors driven by respective inverter circuits is defined according to claim 1.

According to the above configuration, there can be provided the air conditioning apparatus capable of achieving simplification of configuration, downsizing even when provided with a plurality of compressors driven by respective inverter circuits and balancing the current value of the inverter circuits when both compressors operate.

### Brief Description of the Drawings

Figure 1 is a view illustrating a refrigerating cycle of an air conditioning apparatus to which the present invention is applied;
Figure 2 is a circuit diagram illustrating a configuration of a control circuit performing capacity control of compressors constituting the refrigerating cycle illustrated in Figure 1 by use of separate inverter circuits;
Figure 3 is a diagram for explaining a state in which the number of compressors operated and compressor capacity are controlled according to a variation in air conditioning load; and
Figure 4 is a flowchart illustrating a specific processing procedure of the control circuit illustrated in Figure 2.

### Best Mode for Carrying Out the Invention

### [First Embodiment]

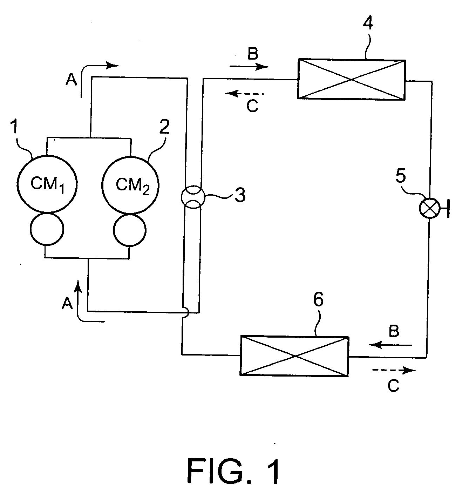

Figure 1 illustrates a refrigerating cycle of an air conditioning apparatus to which the present invention is applied. In Figure 1, the exhaust side of two compressors 1 and 2 is connected to one refrigerant pipe in a shared manner and the intake side thereof is also connected to one refrigerant pipe in a shared manner. The pipe of the exhaust side and the refrigerant pipe of the intake side are connected to an input and output of a four-way valve 3, respectively. Between one switching port and the other switching port of the four-way valve 3, there are sequentially connected via the refrigerant pipe an indoor heat exchanger 4, an expansion valve 5 and an outdoor heat exchanger 6.

Accordingly, when heating operation is performed, as indicated by arrows A and B, refrigerant is circulated via a path from the compressors 1 and 2 to the four-way valve 3 to the indoor heat exchanger 4 to the expansion valve 5 to the outdoor heat exchanger 6 to the four-way valve 3 to the compressors 1 and 2. When cooling operation is performed, as indicated by arrows A and C, refrigerant is circulated via a path from the compressors 1 and 2 to the four-way valve 3 to the outdoor heat exchanger 6 to the expansion valve 5 to the indoor heat exchanger 4 to the four-way valve 3 to the compressors 1 and 2.

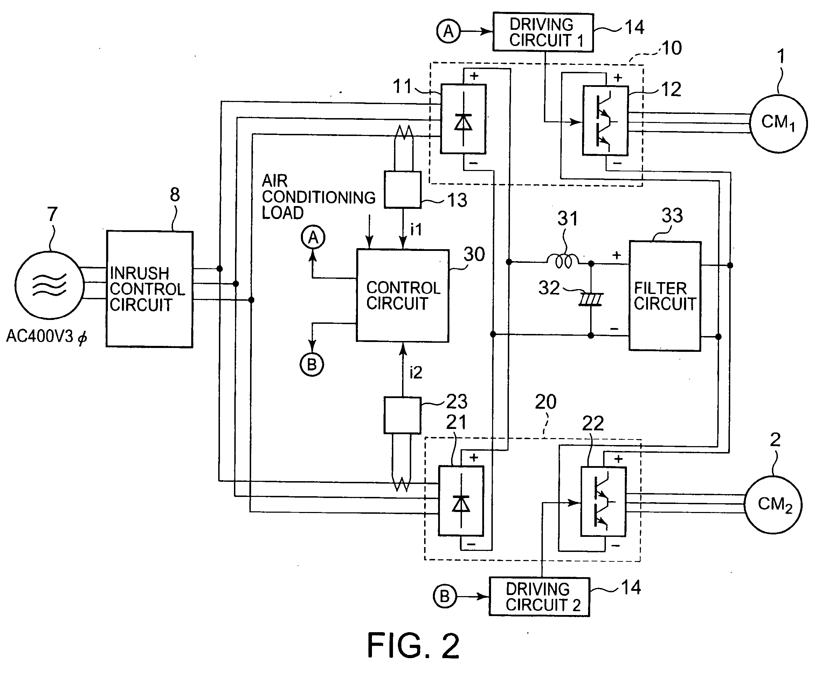

Figure 2 is a circuit diagram illustrating a configuration of a control circuit performing capacity control of compressors 1 and 2 constituting the refrigerating cycle illustrated in Figure 1 by use of separate inverter circuits. In Figure 2, an input end of an inrush control circuit 8 is connected to a commercial three-phase AC power source 7 of 400 V.

As the inrush control circuit 8, there is used, for example, one in which a resistor element and relay contact are connected in parallel; the relay contact is held at an OFF state at the time when the power source is turned on and thereafter, the relay contact is changed to an ON state, whereby inrush current is suppressed.

To an output end of the inrush control circuit 8, there are connected a compound module 10 for driving the compressor 1 and a compound module 20 for driving the compressor 2. The compound modules 10 and 20 are a combination of a rectifier circuit 11 and inverter circuit 12, and a combination of a rectifier circuit 21 and inverter circuit 22, respectively, and each constructed as one integrated package. The two modules are identical with each other, having an identical rating. The compressors 1 and 2 are also identical with each other, having an identical rating. Each input end of the rectifier circuits 11 and 21 is connected to the output end of the inrush control circuit 8.

Here, when it is assumed that the air conditioning apparatus has an air conditioning capacity equivalent to 10 horsepower, two compressors having a power of 5 horsepower are used as the compressors 1 and 2. In order to handle the compressors 1 and 2, as the rectifier circuits 11 and 21, there are used rectifier circuits each having a diode of three-phase bridge connection so as to be capable of receiving alternating current having a voltage of 400 V and outputting direct current of 25 A; as the inverter circuits 12 and 22, there are used inverter circuits having a switching element, such as IGBT, of three-phase bridge connection and having a rating exceeding a DC input current of 25 A and an input voltage of 600 V.

Each output end of the rectifier circuits 11 and 21 is connected in parallel, forming a DC electric line; to the positive electric line (or negative electric line) of this DC electric line, there is connected in series a power factor improving reactor 31; between the positive and negative electric lines of the load side of this power factor improving reactor 31, there is connected a smoothing capacitor 32.

Also, to the positive and negative electric lines, there is connected the power source side of a filter circuit 33 preventing harmonics from leaking into the power source side. The load side of the filter circuit 33 is branched and connected to a DC input end of the inverter circuit 12 and to a DC input end of the inverter circuit 22. To an AC output end of the inverter circuit 12 and an AC output end of the inverter circuit 22, there are connected the compressor 1 and compressor 2, respectively.

Meanwhile, in order to control the inverter circuits 12 and 22, there are provided: a current detection circuit 13 detecting an input current of the rectifier circuit 11; a current detection circuit 23 detecting an input current of the rectifier circuit 21; a control circuit 30 receiving an air conditioning load calculated in consideration of current detection values from the current detection circuits and of a difference between a set value of a temperature setting unit (not illustrated) and a temperature detection value from a room temperature sensor, and generating an ON/OFF signal of each switching element of the inverter circuits 12 and 22; a drive circuit 14 amplifying the ON/OFF signal and supplying it to the inverter circuit 12; and a drive circuit 24 supplying it to the inverter circuit 22.

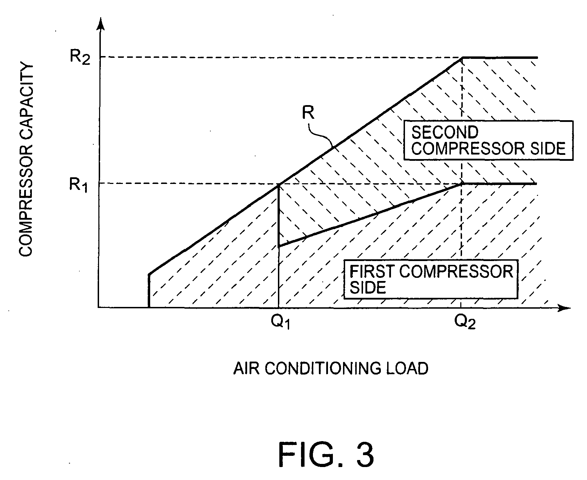

The operation in the first embodiment configured as described above will be described with reference to Figures 2 and 3. Alternating current of the three-phase AC power source 7 is supplied via the inrush control circuit 8 to the rectifier circuits 11 and 21 and outputted as pulsating flow from the rectifier circuits.

The pulsating flow is applied via the power factor improving reactor 31 to both ends of the smoothing capacitor 32 and converted into direct current having small ripple components by the capacitor 32. The direct current is supplied via the filter circuit 33 to the inverter circuits 12 and 22.

According to an air conditioning load, the control circuit 30 applies an ON/OFF signal to the inverter circuit 12 to drive the compressor 1 only, or applies an ON/OFF signal to both the inverter circuits 12 and 22 to drive both the compressors 1 and 2.

Here, when the air conditioning load is small and thus only the compressor 1 is driven, the output frequency of the inverter circuit 12 is varied to vary the compressor capacity according to a variation in air conditioning load; when the air conditioning load is large and thus both the compressors 1 and 2 are driven, the respective output frequencies are varied to equalize the compressor capacity and rate of change between the compressors 1 and 2 according to a variation in air conditioning load.

Figure 3 is a diagram illustrating the relationship described above. The capacity of the compressor is controlled so that air conditioning load and compressor capacity are substantially proportional to each other according to the line R in the whole variation range of air conditioning load. However, in a range in which the air conditioning load is smaller than Q₁, the capacity of the first compressor is controlled to have a value of R₁ or less; in a range in which the air conditioning load is larger than Q₁, both the first compressor and second compressor are controlled by substantially the same frequency, whereby the capacity of the compressors is controlled in a range from R₁ to R₂ (= 2R₁), and even when the air conditioning load exceeds Q₂, the capacity of the compressors is held at R₂.

As a result of performing such control, the current value of the compound modules 10 and 20 can be balanced when both the compressors operate.

According to the first embodiment, the compound modules 10 and 20 used have an identical rating, so the rectifier circuits 11 and 21 use a rectifier element having an identical current capacity. However, due to a difference of forward characteristic between the rectifier elements, the output current may become unbalanced between the rectifier circuits 11 and 21.

Consequently, even when an input current of one of the compound modules 10 and 20 is detected to perform control so that the detected value is a given value or less, it is possible that an abnormal rise in temperature of the switching element of the inverter circuit or an overload of the compressor cannot be prevented.

Thus, according to the first embodiment, in the input side of the rectifier circuits 11 and 21, there are arranged the current detection circuits 13 and 23, respectively, to perform control so that the total value of the two current detection values does not exceed a predetermined threshold value.

More specifically, assume that the input current of the rectifier circuit 11 detected by the current detection circuit 13 is i₁, and the input current of the rectifier circuit 21 detected by the current detection circuit 23 is i₂. The control circuit 30 reads these current detection values and calculates the total current I = i₁ + i₂, and controls the output frequency of the inverter circuits 12 and 22 so that the total current I does not exceed the predetermined threshold value.

Specifically, in a state where only one compressor operates, using a threshold value Is₁, the output frequency of the inverter circuit is controlled so that the total current I does not exceed the threshold value Is₁, i.e., I ≤ Is₁.

On the other hand, in a state where the two compressors operate, the output frequency of the inverter circuit is controlled so that a threshold value Is₂ (>Is₁, generally 2 Is₁) is not exceeded, i.e., I ≤ Is₂.

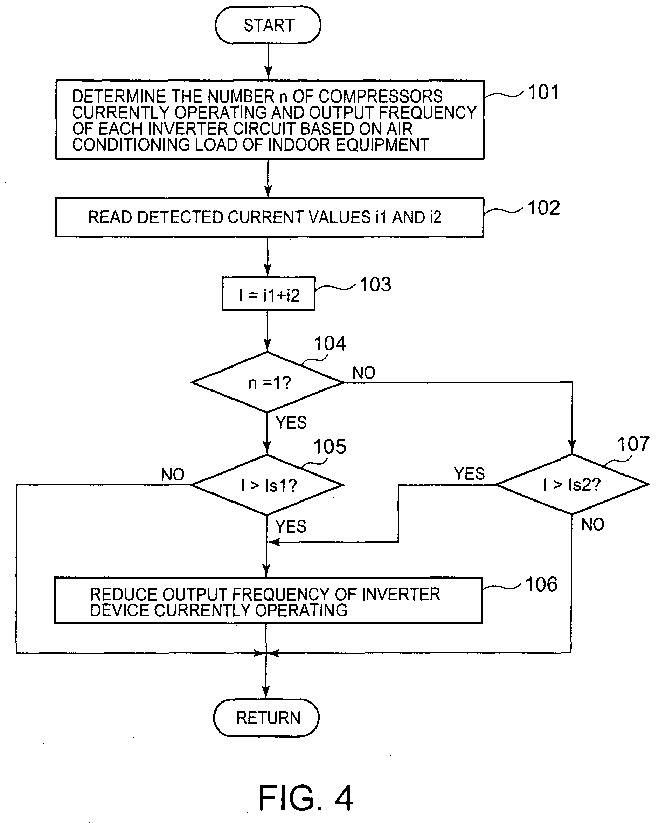

Figure 4 is a flowchart illustrating a specific processing procedure for suppressing, as described above, the input current to a value smaller than a threshold value. Here, in step 101, the number n of compressors operated and the output frequency of each inverter circuit are determined based on an air conditioning load of the indoor equipment. The determination of the number n of compressors operated and the output frequency of each inverter circuit has been variously proposed and known, and hence an explanation thereof is omitted.

Thereafter, in step 102, detection current values Is₁ and Is₂ are read. In step 103, the total value I of the detection current values is calculated. Then, in step 104, it is determined whether or not the number of compressors operated is one; when it is determined that the number is one, it is determined in step 105 whether or not the total value I has exceeded a threshold value Is₁. for one compressor; when the total value I has exceeded Is₁, the output frequency of the inverter circuit currently operating is reduced in step 106 and the above processing is repeated; when the total value I has not exceeded Is₁, the above processing is repeated without reducing the frequency.

Meanwhile, when it is determined in step 104 that the number of compressors operated is not one, it is determined in step 107 that the total value I has exceeded a threshold value Is₂ for two compressors; when the total value I has exceeded Is₂, the output frequency of the inverter circuit currently operating is reduced in step 106 and the above processing is repeated; when the total value I has not exceeded Is₂, the above processing is repeated without reducing the frequency.

As described above, according to the first embodiment, the inverter circuits 12 and 22 are constructed as a constituent component of the compound modules 10 and 20 having integrated therein the rectifier circuits 11 and 21 rectifying alternating current, respectively; the AC power source 7 is connected to each input end of each of the rectifier circuits 11 and 21 of the compound modules 10 and 20; the output ends of the rectifier circuits 11 and 21 are connected in parallel to form a DC electric line; the DC electric line is connected to each input end of each of the inverter circuits 12 and 22 of the two compound modules 10 and 20. As a result, only one set of the power factor improving reactor 31 and the smoothing capacitors 32 and 33 is required. Accordingly, even when a plurality of compressors driven by respective inverter circuits is included, simplification of configuration and downsizing can be achieved.

### [Second Embodiment]

In the first embodiment, there is described an air conditioning apparatus having two compressors driven by respective inverter circuits. However, the present invention is not limited thereto, and is also applicable to an air conditioning apparatus having three or more compressors driven by respective inverter circuits.

## Claims

1. An air conditioning apparatus having a plurality of inverter circuits (12, 22), wherein the inverter circuits are constructed as a compound module (10, 20) respectively in which said inverter circuit is incorporated integrally with a rectifier circuit (11, 21) rectifying alternating current, and an AC power source (7) is connected to each input end of each rectifier circuit (11, 21) of a plurality of said compound modules (10, 20), and output ends of each rectifier circuit are connected in parallel to form a DC electric line, and the DC electric line is connected to input ends of each inverter circuit (12, 22) of the plurality of said compound modules (10, 20), and
the air conditioning apparatus comprising:
a current detection circuit (13, 23) detecting an input current of each rectifier circuit (11, 21) of the plurality of said compound modules (10, 20); and
current control means (30) for controlling, during operating of the inverter circuits (12, 22) of the plurality of said compound modules (10, 20), an output frequency of each inverter circuit (12, 22) of said compound modules based on a result of comparing a total value of the current detected (i1, i2) by said current detection circuit (13, 23) with a current set value (Is1, Is2) set to a different value according to the number of said inverter circuits (11, 21) currently operating.

## Patentansprüche

1. Klimaanlagengerät mit einer Vielzahl von Wechselrichterschaltungen (12, 22), wobei die Wechselrichterschaltungen als ein jeweiliges Verwendungsmodul (10, 20) ausgebildet sind, in dem die Wechselrichterschaltung integral mit einer Gleichrichterschaltung (11, 21) integriert ist, die einen Wechselstrom gleich richtet, und wobei eine Wechselstromquelle (7) mit jedem Eingangsende von jeder Gleichrichterschaltung (11, 21) einer Vielzahl der Verbindungsmodule (10, 20) verbunden ist, und Ausgangsenden von jeder Gleichrichterschaltung parallel verbunden sind, um eine elektrische Gleichstromleitung auszubilden, und wobei die elektrische Gleichstromleitung mit Eingangsenden von jeder Wechselrichterschaltung (12, 22) der Vielzahl der Verbindungsmodule (10, 20) verbunden ist, und wobei das Klimaanlagengerät umfasst:
eine Stromdetektionsschaltung (13, 23) zum Detektieren eines Eingangsstroms von jeder Gleichrichterschaltung (11, 21) der Vielzahl der Verbindungsmodule (10, 20); und
ein Stromsteuermittel (30) zum Steuern, während eines Betriebs der Wechselrichterschaltungen (12, 22) der Vielzahl der Verbindungsmodule (10, 20), einer Ausgangsfrequenz von jeder Wechselrichterschaltung (12, 22) der Verbindungsmodule basierend auf einem Resultat eines Vergleichens eines Gesamtwerts des Stroms (i1, i2), der detektiert wird durch die Stromdetektionsschaltung (13, 23), mit einem Stromeinstellwert (Is1, Is2), der auf einen unterschiedlichen Wert eingestellt ist, gemäß der Anzahl der Wechselrichterschaltungen (11, 21), die gegenwärtig arbeiten.

## Revendications

1. Appareil de climatisation comportant une pluralité de circuits onduleurs (12, 22), dans lequel les circuits onduleurs sont construits en tant que module composite (10, 20) respectivement, dans lequel ledit circuit onduleur est incorporé intégralement avec un circuit de redressement (11, 21) redressant le courant alternatif, et une source de puissance alternative (7) est connectée à chaque extrémité d'entrée de chaque circuit de redressement (11, 21) d'une pluralité desdits modules composites (10, 20), et les extrémités de sortie de chaque circuit de redressement sont connectées en parallèle pour former une ligne électrique continue, et la ligne électrique continue est connectée aux extrémités d'entrée de chaque circuit onduleur (12, 22) de la pluralité desdits modules composites (10, 20), et l'appareil de climatisation comprend :
un circuit de détection de courant (13, 23) détectant un courant d'entrée de chaque circuit de redressement (11, 21) de la pluralité desdits modules composites (10, 20) ; et
des moyens de commande de courant (30) pour commander, pendant le fonctionnement des circuits onduleurs (12, 22) de la pluralité desdits modules composites (10, 20), une fréquence de sortie de chaque circuit onduleur (12, 22) desdits modules composites sur la base d'un résultat de comparaison d'une valeur totale du courant détecté (i1, i2) par ledit circuit de détection de courant (13, 23) avec une valeur de consigne de courant (Is1, Is2) fixée à une valeur différente en fonction du nombre desdits circuits onduleurs (11, 21) actuellement en fonctionnement.
